# EUROPEAN PATENT APPLICATION

(11) **EP 4 439 852 A1**
(43) Date of publication of application: **02.10.2024**
(21) Application number: 22900243.1
(22) Date of filing: 09.11.2022
(51) Int. Cl.: H01M 50/531, H01M 50/528

(54) **POWER BATTERY AND POWER CONSUMING DEVICE**

(30) Priority: 30.11.2021 CN 202122982141 U
(71) Applicant: Contemporary Amperex Technology (Hong Kong) Limited, Central, Central And Western District (HK)
(72) Inventor: HUANG, Yaping, Ningde, Fujian 352100 (CN); ZHANG, Xiaowen, Ningde, Fujian 352100 (CN); LIU, Qiang, Ningde, Fujian 352100 (CN); FAN, Peng, Ningde, Fujian 352100 (CN); LIN, Mingxiang, Ningde, Fujian 352100 (CN)
(74) Representative: Gong, Jinping
(86) International application number: PCT/CN2022/130948
(87) International publication number: WO 2023/098438

(57) **Abstract**

Embodiments of the present application provide a power battery and an electric apparatus. The power battery includes: an adapter (400) and an electrode assembly (10). The electrode assembly (10) includes a tab (200). The tab (200) is connected to an adapter (400) through welding and forms a welding mark (300) on a first side of the tab (200) away from the adapter (400). An adhesive tape (500) covering the welding mark (300) is pasted on the first side, and a first gap (510) is disposed at a position of the adhesive tape (500) corresponding to the welding mark (300). the power battery according to the embodiments of the present application can avoid cracking at the root portion of the welding mark (300) of the tab (200) of the outermost layer.

## Description

The present application claims priority to the Chinese patent application No. 202122982141.6 filed to the China National Intellectual Property Administration on November 30, 2021 and entitled "POWER BATTERY", the entire content of which is incorporated into the present application by reference.

### TECHNICAL FIELD

The present application relates to the field of battery manufacturing, and in particular to a power battery and an electric apparatus.

### BACKGROUND

This section provides merely background information relevant to the present application, and is not necessarily prior art.

Currently, power batteries are usually packaged through a top cap after cathode plates, anode plates and separators are rolled or stacked. A plurality of stacked tabs are led out from both the cathode plate and the anode plates. The tabs are welded to an adapter that connects the top cap to achieve electrical connection with the top cap.

In the related art, the tabs are closed up by pasting an adhesive tape on a welding mark formed after the tabs were welded to the adapter. However, in the subsequent transportation and production procedures, for example when the tab is folded, the adhesive tape pasted to the tab will exert a pulling force on the welding mark of the tab, and thus cause the adhesive tape to continuously pull a root portion of the welding mark of the tab, thereby causing the root portion of the welding mark of the outermost tab to crack, which affects the performance of the power battery.

### TECHNICAL PROBLEM

An objective of the present application is to provide a power battery and an electric apparatus to solve the problem in the prior art that a root portion of a welding mark of a tab in a power battery is easily cracked.

### TECHNICAL SOLUTION

An embodiment of the present application provides a power battery. The power battery includes: an adapter and an electrode assembly. The electrode assembly includes a tab, which is connected to an adapter through welding and forms a welding mark on a first side of the tab away from the adapter. An adhesive tape covering the welding mark is pasted on the first side, and a first gap is disposed at a position of the adhesive tape corresponding to the welding mark.

According to the power battery according to the embodiment of the present application, an adhesive tape covering the welding mark is pasted on the tab, and a first gap is disposed at the welding mark corresponding to the adhesive tape. In the subsequent transportation and production procedures, for example when the tab is folded, due to the changed shape of the original tab, the adhesive tape will produce a pulling force on the welding mark. By disposing the first gap in the portion of the adhesive tape located on the welding mark, the pulling force can be released to prevent the pulling force from being transmitted to the root portion of the welding mark, thereby avoiding to cause cracking at the root portion of the welding mark of the tab of the outermost layer.

Moreover, according to the embodiment of the present application, the following additional technical features may also be provided:
In some embodiments of the present application, the electrode assembly further includes a body portion, the first gap is parallel to the axis of the body portion, and the shape of the welding mark is a rectangle. Two opposite sides of the rectangle are parallel to the first gap, and a length of the first gap is greater than a length of the two opposite sides of the rectangle. In this embodiment, the welding mark is a rectangle. By setting the length of the first gap to be greater than the length of the two opposite sides of the rectangle, the portion where the welding mark is pasted to the adhesive tape can be divided into two regions. During the subsequent transportation and production processes, when the adhesive tape in one of the regions pulls the welding mark, the adhesive tape in the other one of the regions can avoid bearing the pulling force, thereby preventing the root portion of the welding mark from cracking.

In some embodiments of the present application, the length of the first gap is equal to the width of the adhesive tape. In this embodiment, the length of the first gap is the same as the width of the adhesive tape, so it can be implemented more conveniently, which adds a certain degree of convenience to the assembly of the power battery.

In some embodiments of the present application, the distance between the first gap and either side of the rectangle parallel to the first gap is a first distance, the distance between two sides of the rectangle parallel to the first gap is a second distance, and the first distance is greater than or equal to one-fifth of the second distance. By setting the first distance to be greater than or equal to one-fifth of the second distance, it is possible to prevent the area of one of the regions covered by the adhesive tape from being too small.

In some embodiments of the present application, the first distance is greater than or equal to two-fifths of the second distance. By setting the first distance to be greater than or equal to two-fifths of the second distance, the two regions of the welding mark covered by the adhesive tape are approximately equal in area.

In some embodiments of the present application, the power battery includes two electrode assemblies, and the tabs of the two electrode assemblies with the same polarity are connected to the same end of the adapter. In this embodiment, the tabs of the two electrode assemblies with the same polarity are connected to the same end of the adapter, so that the adapter leads the current in the electrode assemblies to an electrode terminal of the top cap of the battery to form normal current conduction.

In some embodiments of the present application, the ends of the tabs of the two electrode assemblies with the same polarity are butt-jointed, and the adhesive tape covers the tabs of the two electrode assemblies with the same polarity. The adhesive tape is provided with a second gap at the butt joint corresponding to the tabs of the two electrode assemblies, and a length of the second gap is equal to the width of the adhesive tape. In this embodiment, when the adhesive tape covering one of the tabs exerts a pulling force on the welding point of the tab, the pulling force will not be transmitted to the other tab that is butt-jointed to it, thereby preventing the root portion of the welding mark of the tab from being continuously pulled to causes cracks in the tab of the outermost layer.

In some embodiments of the present application, the electrode assembly includes a plurality of tabs arranged in a stack, wherein at least one tab includes a tab body and a free end connected to the tab body. The free end is bent at least once to form a bending portion. The bending portion is arranged on one side of the tab body in a stacked manner, and the welding mark is located on the bending portion. In this embodiment, by providing the bending portion, the thickness of the place where ultrasonic welding is performed can be increased, so that the welding stability of the tab is improved. Moreover, after the thickness of the place where the tab is welded is increased, the discharge capacity of the tab in the electrode assembly can be improved. By increasing the discharge capacity of the tab, the power battery in turn has good temperature rise performance in a charging or discharging process, which avoids safety hazards of the power battery such as firing or explosion.

In some embodiments of the present application, the bending portion includes a first bending portion and a second bending portion. The first bending portion is arranged on one side of the tab body in a stacked manner, the second bending portion is arranged in a stacked manner on the side of the first bending portion away from the tab body, and the welding mark passes through the first bending portion and the second bending portion. In the embodiment, by bending the tab body twice, the thickness of the tab can be further increased, so that the discharge capacity of the tab in the electrode assembly is improved, thereby making the power battery have good temperature rise performance in the charging or discharging process, which avoids safety hazards of the power battery such as firing or explosion.

In some embodiments of the present application, the tab provided with the bending portion is arranged in a plurality of tabs and located between two tabs, or the tab provided with the bending portion is arranged on one side of a plurality of tabs. By arranging the tab provided with the bending portion between a plurality of tabs, the welding stability of the tab can be increased and problems such as tab warping after bending can be prevented. When the tab provided with bending portion is arranged on the side of the plurality of tabs away from the adapter, the tabs can be welded more conveniently.

In some embodiments of the present application, the tab provided with the bending portion is arranged on the side of the plurality of tabs away from the adapter. By arranging the bending portion on the side away from the adapter, ultrasonic welding can be performed more conveniently.

An embodiment of the present application further provides an electric apparatus including the power battery of the aforementioned embodiments, and the power battery is used for providing energy.

The above description is only an overview of the technical solution of the present application. In order to better understand the technical means of the present application and thus implement them according to the contents of the specification, and in order to make the above and other objectives, features and advantages of the present application more obvious and understandable, the following is the detailed description of the present application.

### DESCRIPTION OF DRAWINGS

Various other advantages and benefits will become apparent to those of ordinary skill in the art upon reading the following detailed description of the preferred embodiments. The drawings are for the purpose of illustrating preferred embodiments only, and should not be construed as limiting the present application. Throughout the accompanying drawings, the same reference numbers refer to the same components. In the accompanying drawings:
FIG. 1 is a schematic structural diagram of a power battery in one embodiment of the present application;
FIG. 2 is a schematic structural diagram of a power battery in another embodiment of the present application (no second gap is disposed at the butt joint between the ends of the tabs of the two electrode assemblies);
FIG. 3 is a schematic structural diagram of a power battery in another embodiment of the present application (a second gap is disposed at the butt joint between the ends of the tabs of the two electrode assemblies);
FIG. 4 is a schematic structural diagram of an electrode assembly of a power battery in one embodiment of the present application;
FIG. 5 is a side view of FIG. 4;
FIG. 6 is a schematic structural diagram of an electrode assembly of a power battery in another embodiment of the present application;
FIG. 7 is a side view of FIG. 6; and
FIG. 8 is a schematic diagram of a tab of a power battery when the tab is folded in an embodiment of the present application.

The meaning of the reference numbers in the drawings are:
10-electrode assembly; 100-body portion; 101-first electrode assembly;
102-second electrode assembly; 200-tab; 201-first tab; 202-second tab;
203-third tab; 204-fourth tab; 210-tab body; 220-bending portion;
221-first bending portion; 222-second bending portion; 300-welding mark; 400-adapter;
410-first end; 420-second end; 500-adhesive tape; 510-first gap;
520-Second gap;
H1-first distance; and H2-second distance.

### DETAILED DESCRIPTION

The embodiments of the technical solution of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meanings as those commonly understood by those skilled in the art to which the present application pertains to. the terms used herein are for the purpose of describing specific embodiments only, and are not intended to limit the present application. The terms "including" and "having" and any variations thereof in the description and claims of the present application and the aforementioned description of the drawings are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of' refers to two or more (including two). Similarly, "multiple groups" refers to two or more groups (including two groups), and "multiple pieces" refers to two or more pieces (including two pieces).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated device or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection" and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. As the application fields of the power batteries continue to expand, their market demand is also constantly expanding.

In the related art, power batteries are usually packaged through a top cap after cathode plates, anode plates and separators are rolled or stacked. A plurality of stacked tabs are led out from both the cathode plate and the anode plates. The tabs are welded to an adapter that connects the top cap to achieve electrical connection with the top cap. Due to the low discharge capacity of the tabs welded on the adapter, the power battery is prone to a situation in which the temperature rises too quickly in a discharging or charging process, which may even cause the power battery to catch fire or explode in severe cases.

An embodiment of the present application provides an electrode assembly and a power battery. The power battery can be used in, but are not limited to, mobile phones, tablets, laptops, electric toys, power tools, battery cars, electric vehicles, ships, spacecraft, etc. Among them, electric toys can include fixed or mobile electric toys, e.g., game consoles, electric car toys, electric ship toys, and electric airplane toys, etc., and spacecraft can include airplanes, rockets, space shuttles, and spaceships, etc.

The power battery includes a box body and a battery cell accommodated in the box body. The box body is used for provide an accommodating space for the battery cell, and the box body can adopt a variety of structures. In some embodiments, the box body may include a first portion and a second portion that cover each other, and the first portion and the second portion jointly define an accommodation space for accommodating the battery cell. The second portion may be a hollow structure with one end open, and the first portion may be a plate-like structure. The first portion covers the open side of the second portion, so that the first portion and the second portion jointly define an accommodation space. The first portion and the second portion may also each be a hollow structure with one side open, and the open side of the first portion covers the open side of the second portion. Of course, the box body formed by the first portion and the second portion can be of various shapes, such as cylinder, rectangular parallelepiped, etc.

In the power battery, there may be a plurality of battery cells that can be connected in series, in parallel, or in mixed connection. The mixed connection means that the plurality of battery cells are connected in series and in parallel. The plurality of battery cells can be directly connected in series or parallel or in mixed connection, and then the whole composed of the plurality of battery cells can be accommodated in the box body. Of course, the power battery can also have a plurality of battery cells that are connected in series or parallel or in mixed connection to constitute a form of battery module, and then multiple battery modules are connected in series, parallel, or in mixed connection to form a whole which is accommodated in the box body. The power battery may also include other structures. For example, the power battery may also include a bus component for achieving electrical connection among multiple battery cells.

Each battery cell can be a secondary or primary battery; and it can also be a lithium-sulfur battery, a sodium-ion battery or a magnesium-ion battery, but is not limited thereto. The battery cell can be in the shape of cylinder, a flat body, rectangular parallelepiped or other shapes.

The battery cell refers to the smallest unit that makes up a battery. The battery cell includes an end cap, a case body, an electrode assembly, and other functional components. The end cap refers to a component that covers the opening of the case body to isolate the internal environment of the battery cell from the external environment. Without limitation, the shape of the end cap can be adapted to the shape of the case body to fit the case body. A functional component such as an electrode terminal can be arranged on the end cap. The electrode terminal can be used for electrically connecting with the electrode assembly for outputting or inputting electrical energy from or into the battery cell. The case body is an assembly used for fitting the end cover to form the internal environment of the battery cell, where the formed internal environment can be used for accommodating the electrode assembly, an electrolyte solution and other components. One or more electrode assemblies may be contained within the case body. The electrode assembly is mainly formed by winding or stacking a positive-electrode plate and a negative-electrode plate, and is usually provided with a separator between the positive-electrode plate and the negative-electrode plate. The portions of the positive-electrode plate and the negative-electrode plate that contain active materials constitute the body portion of the electrode assembly, and the portions of the positive-electrode plate and the negative-electrode plate that do not contain active materials each constitute the tabs. The positive-electrode tab and the negative-electrode tab can be located together at one end of the body portion or respectively located at two ends of the body portion. In the charging and discharging process of the battery, the positive-electrode active material and the negative-electrode active material react with the electrolyte solution, and the tabs are connected to the electrode terminals to form a current loop.

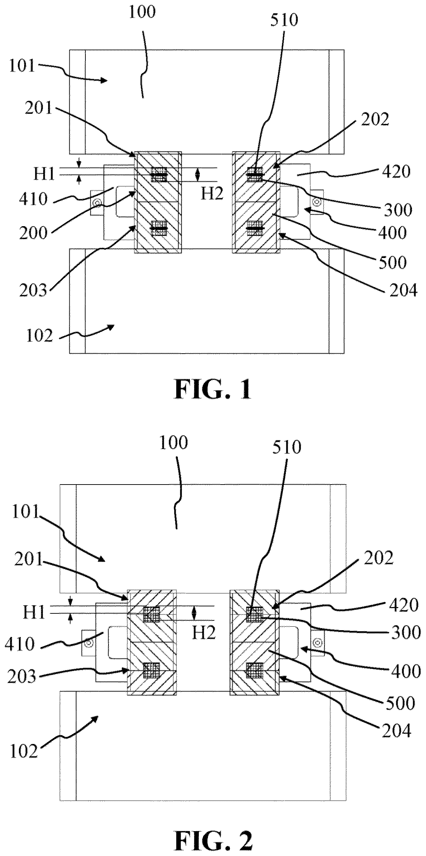

As shown in FIGs. 1 to 4, an embodiment of the present application provides a power battery. The power battery includes: an adapter 400 and an electrode assembly 10. The electrode assembly 10 includes a tab 200. The tab 200 is connected to the adapter 400 through welding and forms a welding mark 300 on the first side of the tab 200 away from the adapter 400. An adhesive tape 500 covering the welding mark 300 is pasted to the first side, and a first gap 510 is disposed at a position of the adhesive tape 500 corresponding to the welding mark 300.

The tab 200 is the portions of the positive-electrode plate and the negative-electrode plate that do not contain active materials. In the related art, an electrode assembly 10 includes a plurality of tabs 200 that are arranged in a stack. The plurality of tabs 200 are welded to the adapter 400 of the power battery by ultrasonic welding, and then the adapter 400 is welded to the top cap of the battery cell by laser welding to realize a battery circuit.

The adapter 400 is used for connecting corresponding electrode lead-out terminal of the end cap in the battery cell and the corresponding tab 200 on the electrode assembly 10. Specifically, the plurality of tabs 200 in the electrode assembly 10 can be connected to the adapter 400 by ultrasonic welding, and the adapter 400 can be connected to the electrode lead-out terminal in the battery cell by laser welding. The plurality of tabs 200 in the electrode assembly 10 are arranged on one side of the adapter 400. When the tabs 200 are welded, the welding points are located on one side of the plurality of tabs 200. Since the tabs 200 are thin, ultrasonic welding is preferred. Of course, laser welding can also be adopted. This embodiment has no particular limitation on the specific welding manner.

After the tab 200 is welded to the adapter 400, a welding mark 300 will be formed on the surface of the tab 200 away from the adapter 400. Depending on the welding manner, the shape of the welding mark 300 will also be different. In some specific embodiments, the tabs 200 are welded onto the adapter 400 by ultrasonic welding, and the welding marks 300 formed therefrom are arranged in a dotted array, and their specific arrangement is not particularly limited in this embodiment. The specific shape of the formed welding mark 300 is not particularly limited, and may be rectangular, trapezoidal, etc.

The adhesive tape 500 is also called tab glue. Specifically, the adhesive tape 500 is further divided into blue glue, white glue, yellow glue and black glue, etc. This embodiment has no specific limitation on the type of adhesive tape 500. On one hand, pasting the adhesive tape 500 on the surface of the welding mark 300, can play an insulating role, that is, the adhesive tape 500 can prevent the tab 200 from contacting the outside to form a conductive loop; and on the other hand, pasting the adhesive tape 500 on the surface of the welding mark 300, can prevent the welding slag formed after welding from falling into the interior of the battery cell to cause a short circuit. Therefore, the pasted tape 500 should cover the tab 200 and cover the welding mark 300 on the tab 200.

The first gap 510 is a force-relieving opening arranged on the adhesive tape 500, and its width is not particularly limited. The first gap 510 can be a notch cut in the adhesive tape 500, or a spacing opening formed by pasting two adhesive tapes 500 that are parallel to each other and do not cover each other on the tab 200, which is not particularly limited in this embodiment.

According to the power battery according to the embodiment of the present application, an adhesive tape 500 covering the welding mark 300 is pasted on the tab 200, and a first gap 510 is disposed at the welding mark 300 corresponding to the adhesive tape 500. In the subsequent transportation and production procedures, for example when the tab 200 is folded, due to the changed shape of the original tab 200, the adhesive tape 500 will produce a pulling force on the welding mark 300. By disposing the first gap 510 in the portion of the adhesive tape 500 located on the welding mark 300, the pulling force can be released to prevent the pulling force from being transmitted to the root portion of the welding mark 300, thereby avoiding to cause cracking at the root portion of the welding mark 300 of the tab 200 of the outermost layer.

In some embodiments of the present application, the electrode assembly 10 further includes a body portion 100, the first gap 510 is parallel to the axis of the body portion 100, and the shape of the welding mark 300 is a rectangle. Two opposite sides of the rectangle are parallel to the first gap 510, and a length of the first gap 510 is greater than a length of the two opposite sides of the rectangle.

The body portion 100 is a main portion where electrochemical reactions occur. It is generally formed by winding or stacking a positive-electrode plate and a negative-electrode plate, and is usually provided with a separator between the positive-electrode plate and the negative-electrode plate.

In this embodiment, the welding mark 300 is a rectangle. By setting the length of the first gap 510 to be greater than the length of the two opposite sides of the rectangle, the portion where the welding mark 300 is pasted to the adhesive tape 500 can be divided into two regions. During the subsequent transportation and production processes, when the adhesive tape 500 in one of the regions pulls the welding mark 300, the adhesive tape 500 in the other one of the regions can avoid bearing the pulling force, thereby preventing the root portion of the welding mark 300 from cracking.

In some embodiments of the present application, the length of the first gap 510 is equal to the width of the adhesive tape 500.

In this embodiment, the adhesive tape 500 can be pasted on the welding mark 300, and then a gap is cut in the portion of the adhesive tape 500 located on the welding mark 300 to divide the adhesive tape 500 into two parts. At this time, the length of the first gap 510 is equal to the width of the adhesive tape 500. Preferably, two pieces of adhesive tapes 500 are pasted on the welding mark 300 at the same time, where one piece of adhesive tape 500 covers a part of the welding mark 300, and the other piece of adhesive tape 500 covers another part of the welding mark 300, such that a gap is formed in the middle of the two pieces of adhesive tapes 500. In a specific embodiment, the first piece of adhesive tape 500 is first pasted on the tab 200 and covers a part of the welding mark 300, and then the second piece of adhesive tape 500 is pasted on the tab 200 and covers another part of the welding mark 300. The second piece of adhesive tape 500 is posted on the tab 200 parallel to the first piece of adhesive tape 500. In this way, the length of the first gap 510 can be conveniently set to be the same as the width of the adhesive tape 500. In this embodiment, the length of the first gap 510 is the same as the width of the adhesive tape 500, so it can be implemented more conveniently, which adds a certain degree of convenience to the assembly of the power battery.

In some embodiments of the present application, the distance between the first gap 510 and either side of the rectangle parallel to the first gap 510 is a first distance H1, the distance between two sides of the rectangle parallel to the first gap 510 is a second distance H2, and the first distance H1 is greater than or equal to one-fifth of the second distance H2.

Referring to FIG. 1, the first distance H1 is the distance between the first gap 510 and either side of the rectangle that is parallel to the first gap 510; and the second distance H2 is the distance between two sides of the rectangle that are parallel to the first gap 510. After the adhesive tape 500 is pasted on the welding mark 300, the first gap 510 divides the welding mark 300 into two regions. When the adhesive tape 500 in one of the region is subjected to a pulling force, the pulling force can only act on this region, while the adhesive tape 500 in the other region will not bear the pulling force. By setting the first distance H1 to be greater than or equal to one-fifth of the second distance H2, it can avoid one of the regions covered by the adhesive tape 500 be too small.

In some embodiments of the present application, the first distance H1 is greater than or equal to two-fifths of the second distance H2.

In some specific embodiments, the first distance H1 is greater than or equal to two-fifths of the second distance H2, so that the areas of the two regions where the adhesive tape 500 covers the welding mark 300 are approximately equal.

In some embodiments of the present application, the power battery includes two electrode assemblies 10, and the tabs 200 of the two electrode assemblies 10 with the same polarity are connected to the same end of the adapter 400.

The two ends of the adapter 400 are a first end 410 and a second end 420, respectively. The first end 410 of the adapter 400 is connected to the positive-electrode tab 200 in the two electrode assemblies 10, and the second end 420 of the adapter 400 is connected to the negative-electrode tab 200 in the two electrode assemblies 10. Therefore, the adapter 400 must have good electrical conductivity. In the related art, the material of the adapter 400 can be copper, nickel, nickel-plated copper, etc., and the shape of the adapter 400 is designed according to the specific structure of the power battery. Therefore, the specific shape of the adapter 400 is not particularly limited in the present application. One end of the adapter 400 is connected to the tab 200, and the other end of the adapter 400 is connected to the electrode terminal of the top cap of the battery. Therefore, the adapter 400 generally has a tab connection part and a battery terminal connection part. In this embodiment, the first end 410 and the second end 420 of the adapter 400 are both tab connection parts. The present application has no particular limitation on the specific shape of the battery terminal connection part.

In this embodiment, the tabs 200 of the two electrode assemblies 10 with the same polarity are connected to the same end of the adapter 400, so that the adapter 400 leads the current in the electrode assemblies to an electrode terminal of the top cap of the battery to form normal current conduction.

In some embodiments of the present application, the ends of the tabs 200 of the two electrode assemblies 10 with the same polarity are butt-jointed, and the adhesive tape 500 covers the tabs 200 of the two electrode assemblies 10 with the same polarity. The adhesive tape 500 is provided with a second gap 520 at the butt joint corresponding to the tabs 200 of the two electrode assemblies 10, and a length of the second gap 520 is equal to the width of the adhesive tape 500.

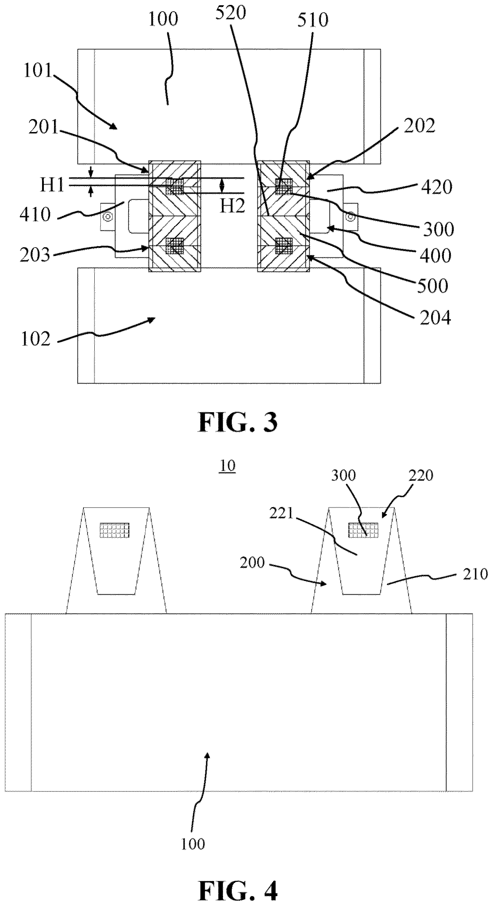

Please refer to FIG. 3. In this embodiment, the two electrode assemblies 10 are respectively a first electrode assembly 101 and a second electrode assembly 102. The first electrode assembly 101 includes a first tab 201 and a second tab 202, where the first tab 201 and the second tab 202 have opposite polarities. The second electrode assembly 102 includes a third tab 203 and a fourth tab 204, where the first tab 201 and the third tab 203 have the same polarity, and the second tab 202 and the fourth tab 204 have the same polarity. The first tab 201 and the third tab 203 are butt-jointed. Adhesive tapes 500 are pasted on the first tab 201 and the third tab 203 respectively, and the adhesive tape 500 pasted on the first tab 201 and the adhesive tape 500 pasted on the third tab 203 do not cover each other, so that a second gap 520 is formed at the butt-joint of the two pieces of adhesive tapes 500. The length of the second gap 520 is the same as the width of the adhesive tape 500. Additionally, the adhesive tape 500 is pasted to the second tab 202 and the fourth tab 204 in the same manner, which will not be described again here.

In this embodiment, when the adhesive tape 500 covering one of the tabs 200 exerts a pulling force on the welding point of the tab 200, the pulling force will not be transmitted to the other tab 200 that is butt-jointed to it, thereby preventing the root portion of the welding mark 300 of the tab 200 from being continuously pulled to causes cracks in the tab 200 of the outermost layer.

In a first specific embodiment, referring to FIG. 1, the welding marks 300 of the first tab 201 and the third tab 203 are both rectangular. The first tab 201 and the third tab 203 are covered with a piece of adhesive tape 500. The adhesive tape 500 covering the welding mark 300 of the first tab 201 is provided with a first gap 510. The length of the first gap 510 is equal to the width of the welding mark 300, and the first distance H1 is a half of the second distance H2. The adhesive tape 500 covering the welding mark 300 of the third tab 203 is also provided with a first gap 510. The length of the first gap 510 is consistent with the width of the welding mark 300, and the first distance H1 is a half of the second distance H2. In this embodiment, the first tab 201 and the third tab 203 are covered with the same piece of adhesive tape 500, and first gaps 510 are respectively opened at the corresponding welding marks 300 of the first tab 201 and the third tab 203, thereby forming a force-relieving opening capable of releasing the pulling force, to prevent the root portion of the welding mark 300 of the tab 200 from being damaged by repeated pulling. In this embodiment, the adhesive tape 500 covering the second tab 202 and the fourth tab 204 is arranged in the same manner as the adhesive tape 500 covering the first tab 201 and the fourth tab 204, and their beneficial effects are also the same, which will not be described again here.

In a second specific embodiment, referring to FIG. 2, the welding marks 300 of the first tab 201 and the third tab 203 are both rectangular. A piece of adhesive tape 500 covers a part of the welding mark 300 of the first tab 201 and a part of the welding mark 300 of the third tab 203 respectively, and another piece of adhesive tape 500 covers another part of the welding mark 300 of the first tab 201. Therefore, a first gap 510 will be formed in the adhesive tape 500 covering the welding mark 300 of the first tab 201. The length of the first gap 510 is the width of the adhesive tape 500. Preferably, the first distance H1 is a half of the second distance H2. Another piece of adhesive tape 500 covers another part of the welding mark 300 of the third tab 203. Therefore, a first gap 510 will be formed in the adhesive tape 500 covering the welding mark 300 of the third tab 203. The length of the first gap 510 is the width of the adhesive tape 500. Preferably, the first distance H1 is a half of the second distance H2. In this embodiment, the first tab 201 and the third tab 203 are covered with a total of three pieces of adhesive tapes 500. Such an arrangement can make it convenient to paste the adhesive tape 500 onto the tabs 200, and can also effectively avoid the root portion of the welding mark 300 of the tabs 200 from being damaged by repeated pulling. In this embodiment, the adhesive tape 500 covering the second tab 202 and the fourth tab 204 is arranged in the same manner as the adhesive tape 500 covering the first tab 201 and the fourth tab 204, and their beneficial effects are also the same, which will not be described again here.

In a third specific embodiment, referring to FIG. 3, the welding marks 300 of the first tab 201 and the third tab 203 are both rectangular. Two pieces of adhesive tapes 500 are pasted on the first tab 201. A first gap 510 is arranged at the joint of the two pieces of adhesive tapes 500, and the first distance H1 is a half of the second distance H2. Two pieces of adhesive tapes 500 are also pasted on the third tab 203. A first gap 510 is arranged at the joint of the two pieces of adhesive tapes 500, and the first distance H1 is a half of the second distance H2. Moreover, a second gap 520 is arranged at the joint of one of the adhesive tapes 500 that covers the first tab 201 and one of the adhesive tapes 500 that covers the third tab 203, so that the adhesive tapes 500 pasted on the first tab 201 and the third tab 203 are divided into four parts that respectively correspond to different regions of the welding mark 300 of the first tab 201 and the welding mark 300 of the third tab 203, thereby preventing a pulling force from being transmitted to other regions of the welding mark 300 when the regions receive a pulling force. In this embodiment, the adhesive tape 500 covering the second tab 202 and the fourth tab 204 is arranged in the same manner as the adhesive tape 500 covering the first tab 201 and the fourth tab 204, and their beneficial effects are also the same, which will not be described again here.

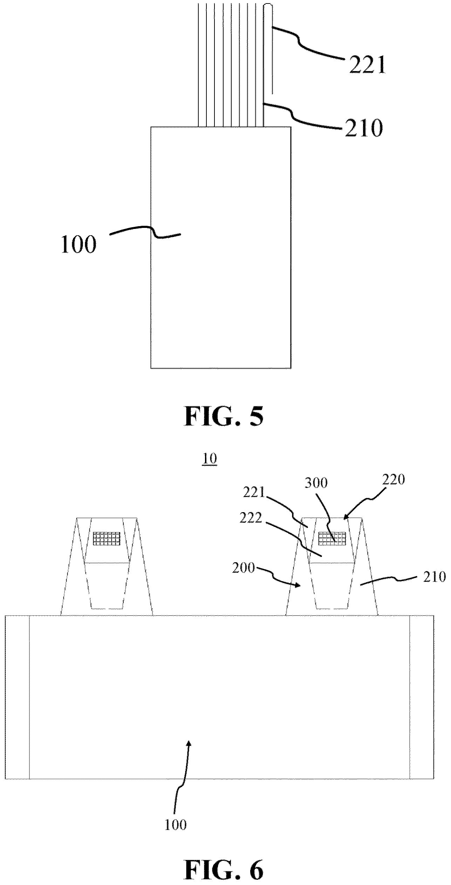

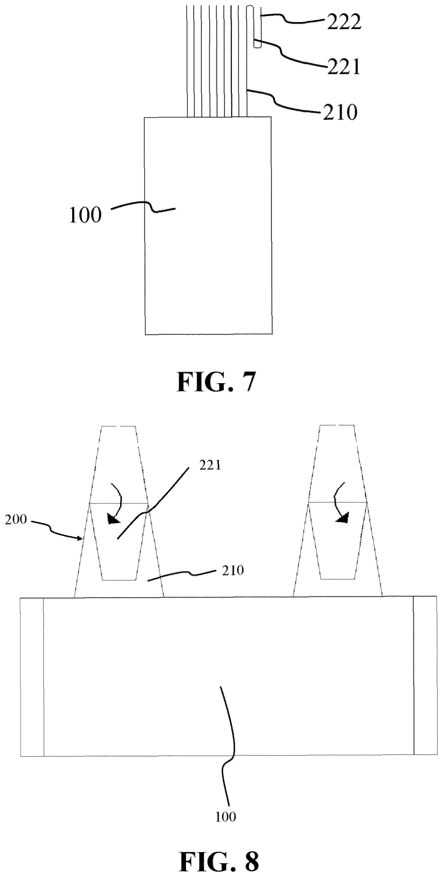

As shown in FIGs. 4 to 8, in some embodiments of the present application, the electrode assembly 10 includes a plurality of tabs 200 arranged in a stack, wherein at least one tab 200 includes a tab body 210 and a free end connected to the tab body 210. The free end is bent at least once to form a bending portion 220. The bending portion 220 is arranged on one side of the tab body 210 in a stacked manner, and the welding mark is located on the bending portion 220.

The tab body 210 is the main part of the tab 200. One end of the tab body 210 is connected to the body portion 100, and the other end of the tab body 210 is a free end.

The bending portion 220 is formed by bending the free end, and the bending portion 220 is arranged on one side of the tab body 210 in a stacked manner. In the embodiments of the present application, the form and number of bending of the tab 200 are not particularly limited. That is to say, the bending portion 220 can be stacked on one side of the tab body 210 in a turnover manner, or it can be turned over and then folded in half, and stacked on one side of the tab body 210. Folding in half refers to turning over both the tab body 210 and the bent tab 200. At this time, the tab 200 after two times of bending has a four-layer structure as viewed from the side. Of course, after the bending portion 220 is stacked on one side of the tab body 210 in the turnover manner, the free end can also be turned over without turning over the tab body 210. At this time, the tab 200 after two times of bending has a three-layer structure as viewed from the side. In the related art, the electrode assembly 10 includes a plurality of tabs 200 that are arranged in a stack. The plurality of tabs 200 are welded to the adapter 400 of the power battery through ultrasonic welding. Welding marks produced after welding are formed on the bending portion 220 of the tab 200. The bending portion 220 of the tab 200 can be located on the side close to the adapter 400 or on the side away from the adapter 400, and the present application has no particular limitation on this. It can be understood that when the bending portion 220 is disposed on the side away from the adapter 400, ultrasonic welding can be conducted more conveniently. Therefore, it is preferred that the bending portion 220 is disposed on the side away from the adapter 400.

According to the electrode assembly 10 of the embodiments of the present application, at least one tab 200 includes a tab body 210 and a bending portion 220. In some specific embodiments, the length of the tab 200 is designed in such a way that the tab is a long tab 200. During ultrasonic welding, the tab 200 is first bent to form a bending portion 220, the bending portion 220 is stacked on the tab body 210, and then ultrasonic welding is conducted to form a welding mark on the bending portion 220 of the tab 200 after welding. At this time, since the thickness of the place where ultrasonic welding is performed is increased, so that the welding stability of the tab 200 is improved. Moreover, after the thickness of the place where the tab 200 is welded is increased, the discharge capacity of the tab 200 in the electrode assembly 10 can be improved. By increasing the discharge capacity of the tab 200, the power battery in turn has good temperature rise performance in a charging or discharging process, which avoids safety hazards of the power battery such as firing or explosion.

In some embodiments of the present application, the bending portion 220 includes a first bending portion 221 and a second bending portion 222. The first bending portion 221 is arranged on one side of the tab body 210 in a stacked manner, the second bending portion 222 is arranged in a stacked manner on the side of the first bending portion 221 away from the tab body 210, and the welding mark passes through the first bending portion 221 and the second bending portion 222.

The free end of the tab 200 is bent for the first time to form the first bending portion 221. At this time, the first bending portion 221 is stacked on one side of the tab body 210, and then the free end of the tab 200 is bent continually and form the second bending portion 222. At this time, the second bending portion 222 is stacked on the side of the first bending portion 221 away from the tab body 210. After the plurality of tabs 200 are welded to the adapter 400 of the power battery in a welding manner, welding marks formed after the welding are formed on the first bending portion 221 and the second bending portion 222. In the embodiments of the present application, a manner of bending the tab 200 can also be in other forms. For example, the bending portion 220 formed after the free end of the tab 200 is bent for the first time is the first bending portion 221. At this time, the first bending portion 221 is bent inward continually, so that the first bending portion 221 is sandwiched between the tab body 210 and the bent free end. At this time, the outermost bending portion 220 is the second bending portion 222. The embodiments of the present application has no particular limitation on the bending form of the tab 200. Therefore, the bending portion 220 stacked on the side of the tab body 210 is called the first bending portion 221. The bending portion 220 stacked on the side of the first bending portion 221 away from the tab body 210 is called the second bending portion 222. In the related art, a battery assembly includes a plurality of tabs 200, where the number of tabs 200 including the first bending portion 221 and the second bending portion 222 can be any number, and the present application has no particular limitation on this.

In the embodiments of the present application, the thickness of the tab 200 can be further increased by bending the tab body 210 twice and passing the welding mark through the first bending portion 221 and the second bending portion 222, so that the discharge capacity of the tabs 200 in the electrode assembly 10 is improved, thereby enabling the power battery to have good temperature rise performance in the charging or discharging process, which avoids safety hazards of the power battery such as firing or explosion.

In some embodiments of the present application, the tab 200 provided with the bending portion 220 is arranged in a plurality of tabs 200 and located between two tabs 200, or the tab 200 provided with the bending portion 220 is arranged on one side of a plurality of tabs 200.

The electrode assembly 10 includes a plurality of tabs 200 that are arranged in a stack. The plurality of tabs 200 are welded to the adapter 400 of the power battery by ultrasonic welding. In a specific embodiment, there is only one tab 200 provided with the bending portion 220, which can be located between the plurality of tabs 200 or on one side of the plurality of tabs 200, where the side of the plurality of tabs 200 may be the side away from the adapter 400 or the side close to the adapter 400. In another specific embodiment, there are a plurality of tabs 200 provided with bending portions 220, and the plurality of tabs 200 provided with bending portions 220 can be located between any two tabs 200, or alternatively one of the tabs 200 provided with bending portions 220 is located on one side of the plurality of tabs 200, and some other tabs 200 provided with bending portions 220 are located between the plurality of tabs 200, where the bending portions 220 of the tabs 200 can be arranged on the side of the tab body 210 away from the adapter 400, or arranged on the side of the tab body 210 close to the adapter 400. The present application has no particular limitation on this. In another specific embodiment, the tab 200 provided with the bending portion 220 can also be the tab 200 including the first bending portion 221 and the second bending portion 222, and the number of the tabs 200 provided with the first bending portion 221 and the second bending portion 222 is not particularly limited. That is to say, the plurality of tabs 200 provided with the bending portions 220 may each be a tab 200 including the first bending portion 221 and the second bending portion 222, or alternatively some of the tabs are tabs 200 including the first bending portion 221 and the second bending portion 222. The position of the tab 200 provided with the first bending portion 221 and the second bending portion 222 is not particularly limited. The tab can be located between the plurality of tabs 200 or on one side of the plurality of tabs 200.

In this embodiment, by arranging the tab 200 provided with the bending portion 220 between a plurality of tabs 200, the welding stability of the tab 200 can be increased and problems such as warping of the tab 200 after bending can be prevented. When the tab 200 provided with bending portion 220 is arranged on the side of the plurality of tabs 200 away from the adapter 400, the tabs 200 can be welded more conveniently.

According to another aspect of the present application, provided is an electric apparatus including the power battery of the aforementioned embodiments, and the power battery is used for providing electrical energy.

Finally, it should be noted that: the aforementioned embodiments are only used for illustrating the technical solution of the present application, rather than limiting it. Although the present application has been described in detail with reference to the foregoing embodiments, it should be understood by those of ordinary skills in the art that: It is still possible to modify the technical solutions recited in the foregoing embodiments, or to conduct equivalent replacements on some or all of the technical features; and these modifications and replacements would not make the nature of the corresponding technical solutions depart from the scope of the technical solutions of embodiments of the present invention, and should all be covered by the claims and description of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A power battery, comprising:
an adapter; and
an electrode assembly comprising a tab, wherein the tab is connected to the adapter through welding and forms a welding mark on a first side of the tab away from the adapter; an adhesive tape covering the welding mark is pasted on the first side, and a first gap is disposed at a position of the adhesive tape corresponding to the welding mark.

2. The power battery according to claim 1, wherein the electrode assembly further comprises a body portion; the first gap is parallel to an axis of the body portion;
a shape of the welding mark is a rectangle, two opposite sides of the rectangle are parallel to the first gap, and a length of the first gap is greater than a length of the two opposite sides of the rectangle.

3. The power battery according to claim 2, wherein the length of the first gap is equal to a width of the adhesive tape.

4. The power battery according to claim 2, wherein a distance between the first gap and either side of the rectangle parallel to the first gap is a first distance;
a distance between the two sides of the rectangle parallel to the first gap is a second distance; and
the first distance is greater than or equal to one-fifth of the second distance.

5. The power battery according to claim 4, wherein the first distance is greater than or equal to two-fifths of the second distance.

6. The power battery according to any one of claims 1 to 5, wherein the power battery comprises two electrode assemblies; and the tabs of the two electrode assemblies with the same polarity are connected to the same end of the adapter.

7. The power battery according to claim 6, wherein the ends of the tabs of the two electrode assemblies with the same polarity are butt-jointed;
the adhesive tape covers the tabs of the two electrode assemblies with the same polarity, and the adhesive tape is provided with a second gap at the butt joint corresponding to the tabs of the two electrode assemblies; and a length of the second gap is equal to the width of the adhesive tape.

8. The power battery according to claim 2, wherein the electrode assembly comprises a plurality of tabs that are arranged in a stack;
wherein at least one of the tabs comprises a tab body and a free end connected to the tab body, and the free end is bent at least once to form a bending portion; the bending portion is arranged on one side of the tab body in a stacked manner; and the welding mark is located on the bending portion.

9. The power battery according to claim 8, wherein the bending portion comprises a first bending portion and a second bending portion;
the first bending portion is arranged on one side of the tab body in a stacked manner;
the second bending portion is arranged on one side of the first bending portion away from the tab body in a stacked manner; and
the welding mark passes through the first bending portion and the second bending portion.

10. The power battery according to claim 8 or 9, wherein the tab provided with the bending portion is arranged in the plurality of tabs and is located between two of the tabs, or the tab provided with the bending portion is arranged on one side of the plurality of tabs.

11. The power battery according to claim 10, wherein the tab provided with the bending portion is arranged on one side of the plurality of tabs away from the adapter.

12. An electric apparatus comprising the power battery according to any one of claims 1 to 11.
